# EUROPEAN PATENT APPLICATION

(11) **EP 1 758 402 A1**
(43) Date of publication of application: **28.02.2007**
(21) Application number: 06004112.6
(22) Date of filing: 01.03.2006
(51) Int. Cl.: H04N 7/50, G11B 27/00

(54) **Mobile Terminal MP4 download with segmentation and reassembly due to limited memory.**

(30) Priority: 24.08.2005 JP 2005243110
(71) Applicant: FUJITSU LIMITED, Kawasaki-shi, Kanagawa 211-8588 (JP)
(72) Inventor: Doi, Kazumi, c/o Fujitsu Kyushu Network Techn. Ltd, Sawara-ku Fukuoka-shi Fukuoka 814-8588 (JP)
(74) Representative: HOFFMANN EITLE

(57) **Abstract**

A method and apparatus including Packet Assembly / Segmentation (PAD) for downloading media data files such as MP4 from the Internet, the files having a datagram format where control information including reproduction conditions of media data and the media data are separately stored in a header and a media data sections, respectively, and determining a division point of the media data section according to predetermined size limitation, for example the maximum memory size of a receiving mobile terminal.
The header is divided into a plurality of headers; and a plurality of divided content files (PDU) is issued, combining the plurality of divided media data and headers.
The headers contain a part of the first MP4 header as well as the URL of the following divided content file, enabling playback of the current file while downloading the next file.

## Description

### BACKGROUND OF THE INVENTION

### 1. Field of the Invention

The present invention relates to a content editing apparatus and a content reproducing apparatus. The content editing apparatus is applied to, for example, a video editing apparatus of the type of a content distribution network.

### 2. Description of the Related Art

In recent years, there exists a content file having a system layer such as MP4 (a file format defined by the Moving Picture Experts Group 4 (MPEG-4)). The content file has a header information portion where control information (metadata) including reproducing conditions with regard to a plurality of multiplexed media data pieces are stored, and a media data portion where only streams of respective media (media data: referred to as elemental streams (ES))7.14 are stored.

When editing such as extraction and division of the content of a content file having such a system layer is carried out, analysis of header information of the content file is required. The header information portion stores time control information corresponding to the media data stored in the media data portion. When a content file is edited, at least editing of the time control information is required.

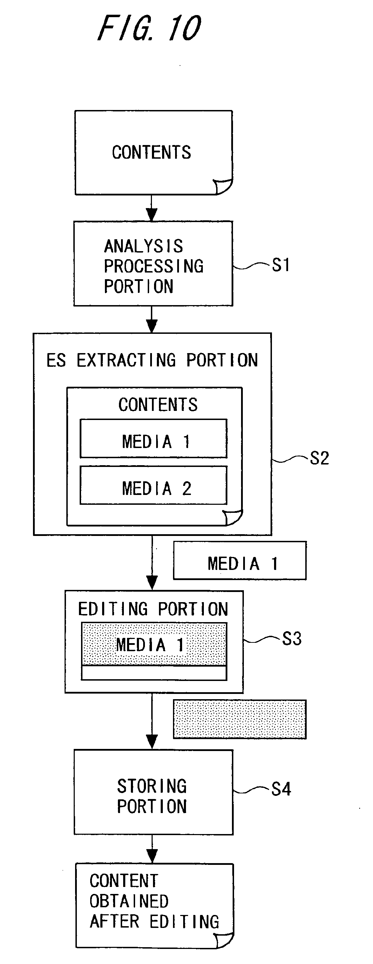

When content stored in the content file is edited, a method illustrated in Fig. 10, for example, can be applied. First, the header information portion of the content file is analyzed (S1). Then, the content stored in the media data portion (the elementary streams (media data) of the respective media) is extracted (S2). Next, editing with regard to the content (media data) such as cutting and pasting is carried out (S3). Then, the edited content is stored in the system layer once again (S4). In this step, processing is carried out where header information according to the edited content is newly created to be stored in the system layer. In such a method, processing load and processing time are comparable to those in a case where the content file is generated from the beginning. Therefore, it is not efficient as a method of reusing the content.

MP4 is used as a content format handled by a 3GPP (3rd Generation Partnership Project) mobile terminal.

Existing mobile terminals do not have a function to, when content composed of a plurality of content files is downloaded and reproduced, reproducing the content in a certain content file while the next content file is downloaded. In other words, such a mobile terminal has only one buffer to store the downloaded data. Therefore, when a content file is downloaded into the buffer, the buffer cannot be used for downloading the next content file until reproducing the content corresponding to the downloaded content file is completed. Therefore, when such a mobile terminal downloads a certain content file, it reproduces the content in the content file, and, after the reproducing is completed, downloads the next content file.

The maximum size of content files which can be handled by an existing mobile terminal vary from one model to another. Therefore, a plurality of content files are prepared by dividing a piece of content taking into consideration the maximum size according to the model such that the time for reproducing the content in one content file can be as long as possible.

Due to the circumstances, when the content is divided into a plurality of content files, such a mobile terminal cannot continuously reproduce the content. In other words, when the content is divided into a plurality of content files, because the content exceeds the maximum size that can be handled by the mobile terminal, it is impossible to continuously play back the content.

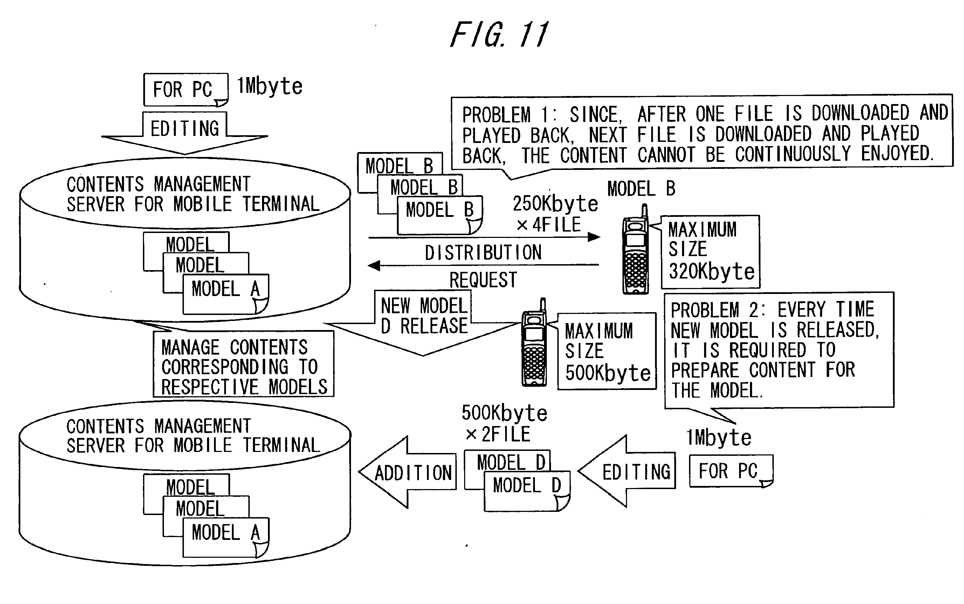

Therefore, as illustrated in Fig. 11, when, for example, content sized for a PC (personal computer) (e.g., of 1 Mbyte) is distributed to a mobile terminal, it is required to divide the content to a maximum size according to the model of the mobile telephone. For example, a content management server must manage divided files formed by dividing the content (e.g., four 250-Kbyte files) so as to be adapted for the Model B mobile terminal (maximum size : 320 Kbytes, for example) illustrated in Fig. 11.

Further, as illustrated in Fig. 11, when a new mobile terminal (Model D with the maximum size of 500 Kbytes, for example) emerges, it is required to prepare divided files formed by dividing the content into two (two 500-Kbyte files) and to store the divided files in the content management server.

A technology disclosed in the following documents are prior art relating to the present invention.
[Patent document 1] JP 2002-297496 A
[Patent document 2] JP 2001-156643 A
[Patent document 3] JP 2003-304511 A

### SUMMARY OF THE INVENTION

An object of the present invention is to provide a technology for preparing divided content files with which continuous playback (reproduction) of content stored in a plurality of divided files can be performed by a mobile terminal.

Another object of the present invention is to provide a technology which allows shortening of download time by decreasing the size of divided files.

In order to attain the objects, the present invention adopts the following structures.

That is, the present invention relates to a content editing apparatus including:
an analyzing portion for analyzing a content file having a format where control information including reproduction conditions of media data and the media data are separately stored in a header portion and a media data portion, respectively, and for determining a division point of the media data portion according to a predetermined size;
a media data dividing portion dividing the media data portion into a plurality of divided media data portions based on the division point;
a header dividing portion dividing the header portion into a plurality of divided header portions based on a division place of the media data portion; and
a preparing portion preparing a plurality of divided content files where a plurality of dividedmedia data portions and a plurality of divided header portions are combined.

Preferably, the preparing portion stores in a header portion of a first divided content file, information common to the plurality of divided content files and information inherent in the first divided content file, and stores in a header portion of a divided content file following the first divided content file, information inherent in the divided content file.

Preferably, the preparing portion adds to a header portion of a divided content file information showing a place where the next divided content file which follows the divided content file is stored.

Also, the present invention relates to a content reproducing apparatus for downloading from a network and reproducing content stored in a plurality of divided content files, including:
a download control portion downloading into a first storage area a divided content file including information of a place where a next divided content file is stored;
a reproduction processing portion carrying out reproduction processing of content based on the divided content file; and
a download request portion requesting the network of download of the next content file based on the place where the next content file is stored before the reproduction processing based on the divided content file is completed, wherein
the download control portion downloads the next divided content file transmitted from the network in response to the download request into a second storage area different from the first storage area, and
the reproduction processing portion carries out reproduction processing of the next divided content file stored in the second storage area following the completion of the reproduction processing of the divided content file.

Preferably, a first divided content file first downloaded by the download control portion includes common information common to a plurality of content files, and
the playback processing portion carries out reproduction processing of a divided content file which follows the first content file using the common information.

The present invention can be structured as a method of editing content and a method of reproducing content, or, a program for making a computer execute such editing and reproducing or a recording medium for recording thereon such a program, having features similar to those of the content editing apparatus and the content reproducing apparatus.

According to the present invention, it is made possible to continuously reproduce content stored in a plurality of divided files by a mobile terminal.

Further, according to the present invention, by decreasing the size of the divided files, the download time can be shortened.

### BRIEF DESCRIPRION OF THE DRAWINGS

Fig. 1 is a diagram illustrating an exemplary structure of a content editing apparatus according to the present invention;
Fig. 2A is an explanatory diagram of an MP4 file format;
Fig. 2B is an explanatory diagram of a format (syntax) of boxes illustrated in Fig. 2A;
Fig. 3A is an explanatory diagram of a format (syntax) and a dividing method of an stco box (offset information);
Fig. 3B is a diagram illustrating divided stco boxes;
Fig. 4A is an explanatory diagram of a format (syntax) and a dividing method of an stsc box (chunk information);
Fig. 4B is a diagram illustrating divided stsc boxes;
Fig. 5A is an explanatory diagram of a format (syntax) and a dividing method of an stsz box (size information);
Fig. 5B is a diagram illustrating divided stsz boxes;
Fig. 6A is an explanatory diagram of a format (syntax) and a dividing method of an stts box (time information);
Fig. 6B is a diagram illustrating divided stts boxes;
Fig. 7A is an explanatory diagram of a syntax (format) of a first divided file;
Fig. 7B is an explanatory diagram of a syntax (format) of a divided file which follows the first divided file (follow file);
Fig. 8 is a diagram illustrating an exemplary structure of a content generating apparatus according to the present invention;
Fig. 9 is a diagram illustrating an exemplary application of a content editing apparatus and a content generating apparatus according to the present invention;
Fig. 10 is an explanatory diagram of existing technology and illustrates a conventional exemplary editing method of content files; and
Fig. 11 is an explanatory diagram of problems relating to content distribution for a mobile telephone.

### DETAILED DESCRIPTION OF THE PREFERRED EMBODIMENTS

Embodiments of the present invention are described in the following with reference to drawings. The structures of the embodiments are exemplary only, and the present invention is not limited to such structure of the embodiments.

<Content Editing Apparatus>

### First, an embodiment of a content editing apparatus according9 to the present invention is described.

«Structure of Editing Apparatus»

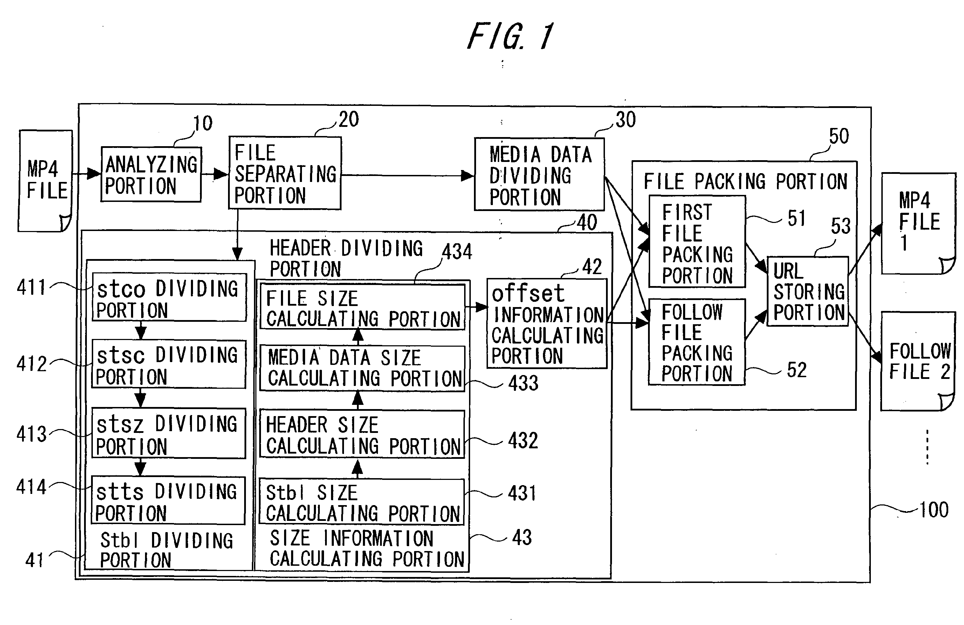

Fig. 1 is a diagram illustrating an exemplary structure of a content editing apparatus. In Fig. 1, a content editing apparatus (hereinafter referred to as "editing apparatus") 100 edits a content file such as an MP4 file into a plurality of divided files.

A content file applied to the editing apparatus includes a header portion for storing header information including distribution conditions and content time, and a media data portion for storing media data as the content, and the content and control information related to playback or reproduction of the content are separately stored in the header portion and the media data portion, respectively.

In this example, an example is shown where an MP4 file as a composite content file having a plurality of types of media data (e.g. , video and audio) multiplexed and stored therein is applied as the content file. It is to be noted that the present invention is applicable to a content file with a single type of media data being stored.

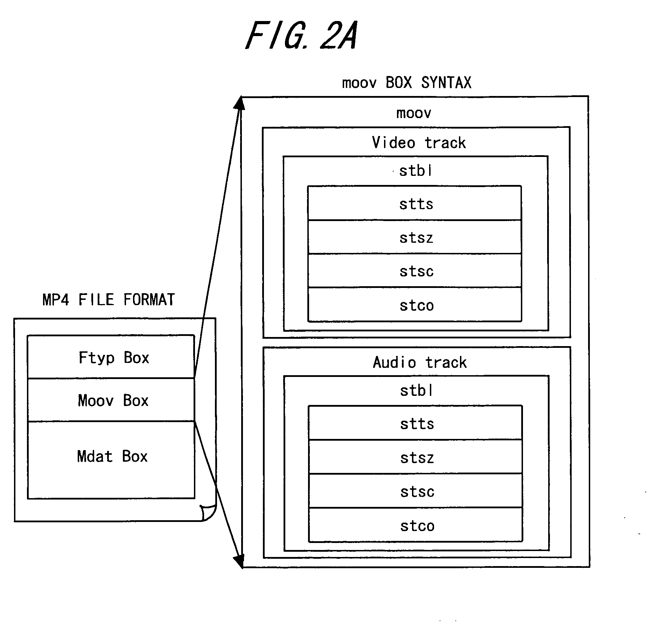

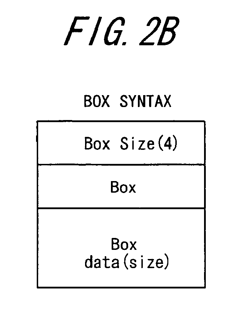

Here, an MP4 file format is described. Fig. 2A is a schematic explanatory diagram of the MP4 file format while Fig. 2B is a diagram illustrating the syntax of each box illustrated in Fig. 2A.

As illustrated in Fig. 2A, the MP4 file format generally includes Ftyp Box, Moov Box, and Mdat Box. As illustrated in Fig. 2B, each of the boxes has a box size, a box main body, and a data size in the box.

Ftyp Box is a box where the type of the file is described, and only one Ftyp Box is included at the top of a file. Moov Box is a container including all metadata of the file, and corresponds to a header information portion of a content file. Information as metadata includes header information of the respective tracks (such as moving images (Video) and sound (Audio)), meta-description of the content, time information, and the like.

Mdat Box is a container of the media data main body of a track, and corresponds to a media data portion of a content file. The number of Mdat Box in a file is arbitrary. Further, the structure of a track included in Mdat Box is also arbitrary. In the example illustrated in Fig. 2A, video and audio tracks are stored in Mdat Box. The content of Moov Box is according to the track structure of Mdat Box. In the example illustrated in Fig. 1A, Moov Box has a video track and an audio track.

Each of the tracks has an stbl box as a sample information managing portion for managing sample information of the media data. An stbl box includes an stts box as a time information managing portion for managing time information, an stsz box as a size information managing portion for managing size information, an stsz box as a chunk information managing portion for managing sample information as a certain group (chunk), and an stco box as an offset information managing portion for managing offset information of a chunk.

With reference to Fig. 1 again, the editing apparatus 100 includes an analyzing portion 10 for analyzing a content file inputted to the editing apparatus 100, a file separating portion 20 for separating the content file into a header portion and a media data portion, a media data dividing portion 30 for dividing media data in the media data portion, a header dividing portion 40 for dividing header information in the header portion, and a file packing portion 50 for generating divided files which are combinations of divided media data and corresponding header information.

The analyzing portion 10 determines a division point of the media data portion in the content file inputted to the editing apparatus 100 according to a designated size. The designated size is determined such that, taking into consideration the maximum size that a predetermined content playback apparatus (e.g., a mobile terminal) can handle, the playback apparatus downloads a certain content file and, during the content in the content file is played back, download of the next content file is completed. Media data includes a plurality of chunks, and can be divided into blocks only by the chunk. Therefore, a place which is a border between chunks is determined to be a division point. The analyzing portion 10 notifies the media data dividing portion 30 and the header dividing portion 40 of the division point.

The file separating portion 20 separates the content file into the header portion and the media data portion. The media data portion is inputted to the media data dividing portion 30 while the header portion is inputted to the header dividing portion 40.

The media data dividing portion 30 divides the media data in the media data portion inputted from the file separating portion 20 based on the file division point determined by the analyzing portion 10. The divided media data is inputted to the file packing portion 50.

The header dividing portion 40 divides the header information in the header portion inputted from the file separating portion 20 based on the division point determined by the analyzing portion 10. The divided header information is inputted to the file packing portion 50.

The file packing portion 50 packs a divided media data block inputted from the media data dividing portion 30 and a corresponding divided header information block inputted from the header dividing portion 40 into one content file. In this way, a plurality of divided content files is prepared.

The prepared divided content files are placed in a predetermined place on the network (e.g. , a server for distributing content) as content to be distributed to the playback apparatus.

Specifically, the header dividing portion 40 includes an stbl dividing portion (sample information dividing portion) 41 for dividing an stbl portion (sample information managing portion) of the header portion of an MP4 file inputted from the file separating portion 20 based on the file division point, an offset information calculating portion 42 for revising stco information (offset information) in an stco portion (offset information managing portion) for managing offset information to offset information after the division, and a size information calculating portion 43 for revising size information of the respective information managing portions (stbl, header, media data, file, and the like) to size information after the division.

The stbl dividing portion (sample information managing portion) 41 has an stco dividing portion (offset information dividing portion) 411 for dividing the stco portion, an stsc dividing portion (chunk information managing portion) 412 for dividing an stsc portion (chunk information managing portion), an stsz dividing portion (size information dividing portion) 413 for dividing an stsz portion (size information managing portion), and an stts dividing portion (time information managing portion) 414 for dividing an stts portion (time information managing portion) for managing time information.

The size information calculating portion 43 has an stbl size calculating portion (sample information managing portion size calculating portion) 431 for calculating the size of the divided stbl portion, a header size calculating portion 432 for calculating the size of the divided header portion, a media data size calculating portion 433 for calculating the size of the divided media data, and a file size calculating portion 434 for calculating the size of the divided file.

Further, specifically, the file packing portion 50 includes a first file packing portion (First File Packing portion) 51, a follow file packing portion (Follow File Packing portion) 52, and a continuous content URL storing portion 53.

A content file inputted to the editing apparatus 100 is divided into N (N is a natural number) divided media data blocks and N divided header information blocks according to a designated maximum size. A first divided media data block and a first divided header information block are inputted to the first file packing portion 51. Second to Nth divided media data blocks and second to Nth divided header information blocks are inputted to the follow file packing portion 52.

In a first embodiment, for the purpose of decreasing the size of the second to Nth divided content files, the second to Nth divided content files are prepared in a file format different from that of the first divided content file. Therefore, the preparing method (packing method) of the second to Nth content files is different from the preparing method (packing method) of the first content file. In view of the circumstances, the first file packing portion 51 and the follow file packing portion 52 for achieving the respective packing methods are prepared.

The file packing portions 51 and 52 prepare the divided content files including the divided media data blocks and the divided header information blocks, and input the divided content files to the URL storing portion 53.

The URL storing portion (position information adding portion) 53 adds identification information showing the places on the network where the respective divided content files are stored to the inputted divided content files (follow files which store continuous content on the content time) inputted plurality of. Here, URLs (Uniform Resource Locators) which are addresses on the Internet are added to (stored in) the respective divided content files.

The editing apparatus 100 can be implemented by an information processing apparatus (a computer) having a processor such as a CPU (Central Processing Unit), a storage device (memory) for storing programs executed by the processor and data used when the programs are executed, an I/O interface, a communication interface, and the like.

In this case, the respective functions of the analyzing portion 10, the file separating portion 20, the media data dividing portion 30, the header dividing portion 40, and the file packing portion 50 are implemented by execution of the programs by the processor. Alternatively, those functions can be implemented by hardware logic.

«Exemplary Operation of Editing Apparatus»
Next, exemplary operation of the editing apparatus 100 having the structure is described. In Fig. 1, the editing apparatus 100 obtains a content file (an MP4 file) to be edited and an edit size (a designated size). The obtained MP4 file and edit size are inputted to the analyzing portion 10.

The analyzing portion 10 analyzes the MP4 file, and determines a division point (a place where the media data is to be divided, e.g., the place of xth byte counting from the top) of the media data in Mdat Box according to the designated edit size. Here, when a plurality of media is multiplexed, a division point is determined with regard to the respective media. The analyzing portion 10 inputs the content file and the division point to the file separating portion 20.

The file separating portion 20 separates the content file into a header portion (Ftyp Box and Moov Box) and a media data portion (Mdat Box). The file separating portion 20 transmits the media data portion together with the division point to the media data dividing portion 30. Further, the file separating portion 20 transmits the header portion and the division point to the header dividing portion 40.

The media data dividing portion 30 divides the media data in Mdat Box based on the division point. When a plurality of media is multiplexed, division of the respective media is carried out.

The header dividing portion 40 divides information of the stts box where the time information in the stbl box in the header portion is stored, the stsz box where the size information in the stbl box in the header portion is stored, the stco box where the chunk offset information in the stbl box in the header portion is stored, and the stsc box where the chunk information in the stbl box in the header portion is stored based on the division point. The stco box is divided by an stco dividing portion 411. The stsc box is divided by an stsc dividing portion 412. The stsz box is divided by an stsz dividing portion 413. The stts box is divided by an stts dividing portion 414.

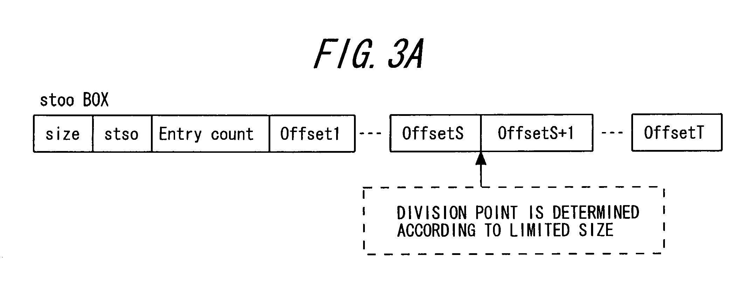

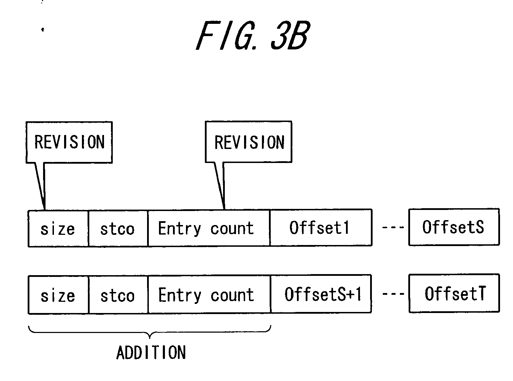

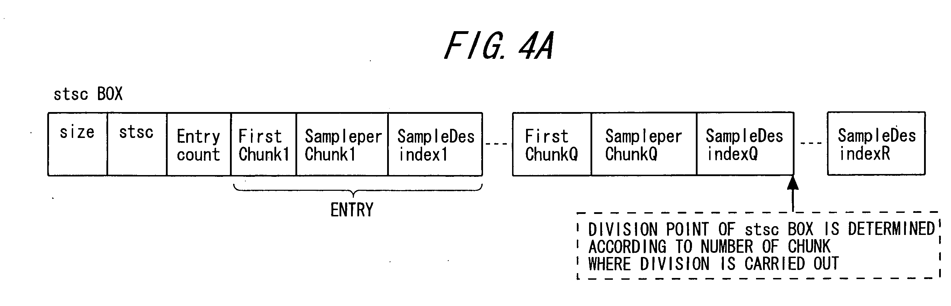

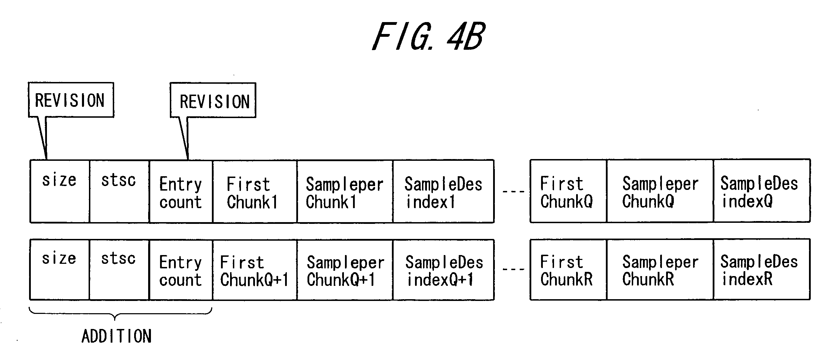

Figs. 3 to 6 are diagrams illustrating an exemplary header dividingmethod. Fig. 3A is an explanatory diagram of a format (syntax) and a dividing method of an stco box (offset information) and Fig. 3B is a diagram illustrating divided stco boxes. Fig. 4A is an explanatory diagram of a format (syntax) and a dividing method of an stsc box (chunk information) and Fig. 4B is a diagram illustrating divided stsc boxes.

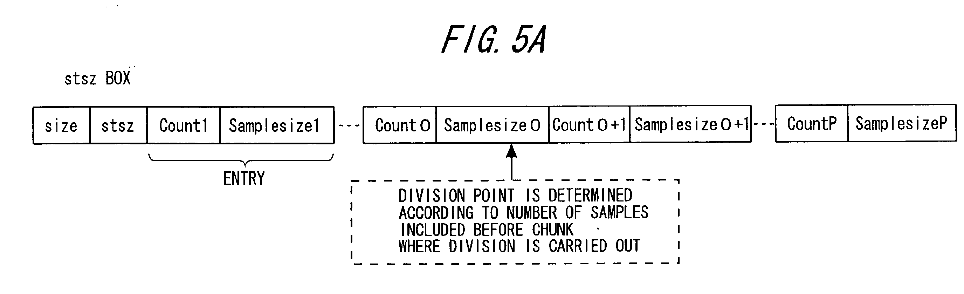

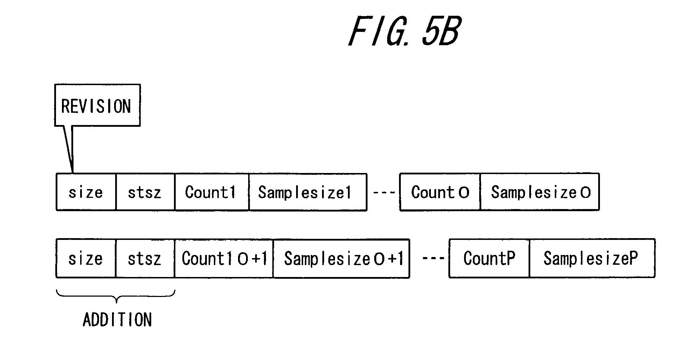

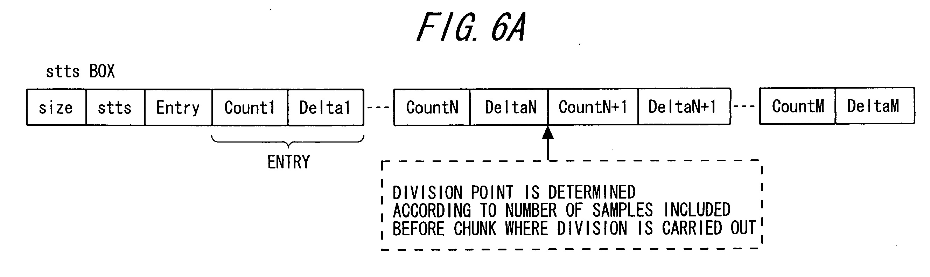

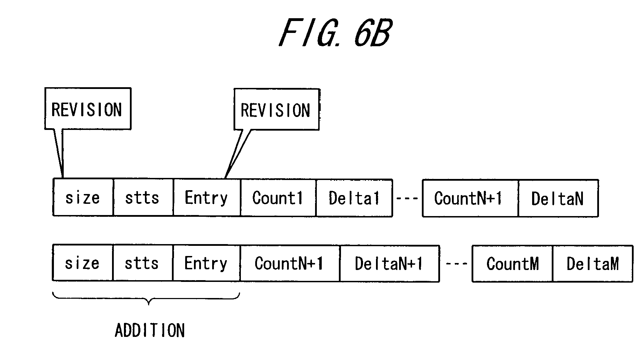

Fig. 5A is an explanatory diagram of a format (syntax) and a dividing method of an stsz box (size information) and Fig. 5B is a diagram illustrating divided stsz boxes. Fig. 6A is an explanatory diagram of a format (syntax) and a dividing method of an stts box (time information) and Fig. 6B is a diagram illustrating divided stts boxes. Figs. 3 to 6 show an example where an MP4 file is divided into two at the place of chunk offset S counting from the top of the MP4 file.

The stco box has chunk offset information of the position of each chunk counting from the top of the file. The stco box has a format as illustrated in Fig. 3A. More specifically, starting from the top, the size information (size) of the stco box, a character string (an identifier) "stco" showing that it is an stco box, and an entry count indicating the number of entries of the offset information are stored. When collectively referred to, those are called as an "stco box header".
Following the stco box header, entries of the chunk offset information are continuously stored. Here, T (1, 2, ... , S, S+1,..., T) entries exist. As the chunk offset information, a set of the chunk number corresponding to the number of bytes counting from the top of the file and the number of bytes of the chunk is stored in the respective entries.

The stco dividing portion 411 adds, from the top, the number of bytes included in the respective entries, and the end of an entry when the result of the addition becomes maximum in the range up to the number of bytes as the division point is determined to be the division place of the stco box. Here, as the division place corresponding to the division point determined by the analyzing portion 10, the stco box is divided between the entry (chunk number) S and the entry S+1.

Next, as illustrated in Fig. 3B, for the purpose of setting the entries S+1 to T in the stco box format, the stco box header is added to the top of those entries. More specifically, "size", "stco", and "entry count" are added. Here, the value of "entry count" is (T-S), and the value of "size" is the total of the size of the entries S+1 to T and the size of "size", "stco", and "entry count".

On the other hand, the stco dividing portion revises the values of "size" and "entry count" in the stco box after the entries S+1 to T are separated (data on the top side). Here, the size of the entries S+1 to T is subtracted from the value of "size". Further, the value of "entry count" is revised to "S". The offset information entry (chunk number) S corresponding to the division place of the offset information is given to the stsc dividing portion 412.

The stsc box stores information of a group of continuous samples having the same encoding conditions (chunk). The stsc box has a format (syntax) as illustrated in Fig. 4A.

More specifically, starting from the top, the size information (size) of the stsc box, a character string (an identifier) "stsc" showing that it is an stsc box, and an number of entries information (entry count) of the chunk information are stored in the stsc box. When collectively referred to, those are called as an "stsc box header".
Following the stsc box header, chunk information entries are continuously stored.

A chunk information entry includes "First Chunk x (x is either one of natural numbers 1-R) "indicating the number (index) of the chunk, "Sample per Chunk x" indicating the number of samples in the chunk, and "SampleDes index x" indicating the encoding information (index indicating the encoding form of the sample) of the chunk. In this example, R (1, 2, ..., Q, Q+1, ..., R) entries are stored.

The stsc dividing portion 412 divides the stsc box at the place of the chunk index corresponding to the division place (chunk number S) of the chunk offset information carried out at the stco dividing portion 411. In Fig. 4A, the stsc box is divided at the index Q corresponding to the chunk number S.

Next, as illustrated in Fig. 4B, the stsc dividing portion 412 prepares an stsc box by adding a stsc box header ("size", "stsc" , and "entry count") having values corresponding to the latter side of the divided data (chunk information entries of the indices Q+1 to R).

Further, the stsc dividingportion 412 revises the values of "size" and "entry count" of the data on the top side (the stsc box after the chunk entries of the indices Q+1 to R are separated) .

The stsc dividing portion 412 gives the total number of samples of the top side of the divided stsc boxes (the number of samples included in the stsc box up to the division place) to the stsz dividing portion 413. The total number of samples of the top side of the divided stsc boxes can be obtained by determining the total sum of the samples stored in the respective entries in this box.

The stsz box stores information with regard to the number of continuous samples each having the same size. The stsz box has a format illustrated in Fig. 5A. More specifically, the stsz box stores, starting from the top, the size information (size) of the stsz box, and a character string (an identifier) "stsz" showing that it is an stsz box. When collectively referred to, those are called as an "stsz box header".

Following the stsz box header, size information entries are continuously stored. A size information entry has a set of the information (count) on the number of continuous samples each having the same size and the sample size (SampleSize). In this example illustrated in FIG . 5A, P (1, 2, ..., O, O+1, ..., P) sample information entries are stored.

The stsz dividing portion 413 determines a division place of the stsz box based on the total number of samples (also represented as "notified number of samples") received from the stsc dividing portion 412. More specifically, the stsz dividing portion 413 adds the number of samples starting from the size information entry at the top. Then, the stsz dividing portion 413 determines the end of the size information entry when the result of the addition becomes a maximum value in the range up to the notified number of samples as the division place of the stsz box.

As illustrated in Fig. 5B, the stsz dividing portion 413 prepares a division stsc box by adding a stsz box header ("size" and an identifier "stsz") to the latter side of the divided sample information entries. Further, the stsz dividing portion 413 revises the value of "size" on the top side of the divided stsz box. The stsz dividing portion 413 gives the notified number of samples to the stts dividing portion 414.

The stts box stores information with regard to the number of continuous samples each having the same duration. The stts box has a format illustrated in Fig. 6A. More specifically, the stts box stores, starting from the top, the size information (size) of the stts box, a character string (an identifier) "stts" showing that it is an stts box, and the number of entries (Entry count) included in the stts box. When collectively referred to, those are called as an "stts box header".

Following the stts box header, time information entries are continuously stored. A time information entry has a set of the number of continuous samples (count) having the same duration and the duration (delta) of the samples. In this example, M (1, 2, ... , N, N+1, ..., M-1, M) time information entries are stored.

In a similar manner to the case of the stsz dividing portion 413, the stts dividing portion 414 divides the stts box at a place corresponding to the notified number of samples (total number of samples). Then, the stts dividing portion 414 adds the stts box header (size information (size), the identifier "stts", and the number of entries (Entry Count)) to the top of the divided entries N+1 to M to set the stts box format.

With regard to the top side of the divided stts boxes, the size information (size) and the entry information (Entry Count) are revised. Thus, the division of the stbl box ends. The divided stco boxes, stsc boxes, stsz boxes, and stts boxes are put together to form the divided stbl boxes, respectively.

It is to be noted that, in the process, the process carried out by the sttz dividing portion 413 and the process carried out by the stts dividing portion 414 may be carried out in the reverse order or may be carried out in parallel.

The process carried out by the header dividing portion 41 (division of the stbl box) is carried out with regard to all the trunks of Moov Box. Further, this embodiment shows a case where the stbl box is divided into two. When the stbl box is divided into three or more, process similar to that described above is carried out with regard to the respective division points to prepare a plurality of divided stbl boxes.

With reference to Fig. 1 again, the size information calculating portion 43 corrects the difference in the size information caused by dividing the header portion and the media data portion. More specifically, first, the stbl size calculating portion 431 calculates the size of each of the divided stbl boxes. Then, the header size calculating portion 432 corrects the difference in the size of the header (Moov Box including the stbl box) caused by dividing the stbl box.

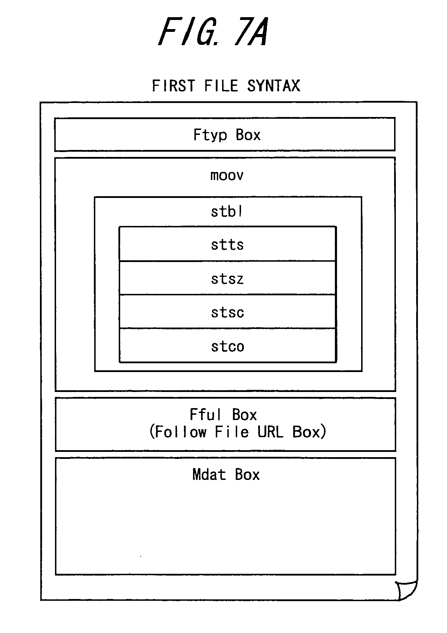

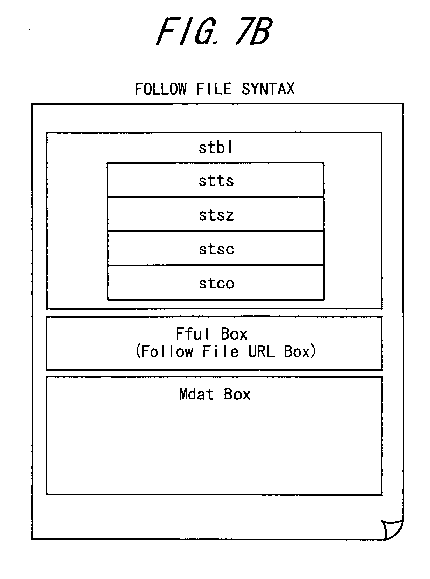

The media data size calculating portion 433 calculates the size of each of the divided media data. The file size calculating portion 434 calculates the size of each of the divided files including a follow file URL designating box of a fixed size newly defined in the file format (see Figs. 7A and 7B).

The offset information calculating portion 42 corrects the difference in the chunk offset information caused by the division. As described in the above, the chunk offset information is information on the positions of the respective chunks counting from the top of the content file. When the size of the header portion is changed, the positions of the respective chunks counting from the top (offset positions) are changed. The offset information calculating portion 42 revises the offset information of the respective chunks included in the stco box according to the size change. More specifically, the offset information calculating portion 42 subtracts the header size decreased by the division from the number of bytes indicating the offset positions in the respective offset information entries of the stco box.

Then, the header dividing portion 40 inputs Ftyp Box of the header portion inputted from the file separating portion 20 and Moov Box including the divided stbl box at the top to the first file packing portion 51 in the file packing portion 50. Further, the header dividing portion 40 inputs the second and the following divided stbl boxes to the follow file packing portion 52.

Further, the media data dividing portion 30 inputs the first divided Mdat Box of a plurality of divided media data portions (divided Mdat Boxes) caused by the division of the media data portion (Mdat Box) to the first file packing portion 51. Further, the media data dividing portion 30 inputs the divided Mdat Boxes except the top divided Mdat Box to the follow file packing portion 52.

In the file packing portion 50, using the divided header portion and the divided media data portion, a plurality of divided content files which are continuous on the content time (divided files) are prepared. The plurality of divided files includes a first file and a successive file (follow file) which follows the first file. Fig. 7A is a diagram illustrating a format (syntax) of the first file, while Fig. 7B is a diagram illustrating a format (syntax) of a follow file.

The first file packing portion 51 prepares a content file where the divided header portion (Ftyp Box and Moov Box) inputted from the header dividing portion 40, the divided media data portion (Mdat Box) from the media data dividing portion 30, and the follow file URL designating box (Follow File URL Box) which stores the URL of the content file next to this content file (the follow file next to the first file) are packed.

The follow file URL designating box is a box newly defined according to the present invention, and stores the URL indicating the position of the file next to this file. Targets of the packing include Ftyp Box, Moov Box, and Mdat Box (Fig. 7A). This satisfies the syntax of the MP4 file format. Therefore, a content file prepared by the first file packing portion 51 is a normal MP4 file. It is to be noted that the follow file URL designating box is newly expanded.

On the other hand, the follow file packing portion 52 prepares a content file where the divided header portion (stbl Box) inputted from the header dividing portion, the divided media data portion (Mdat box (which stores ES (elemental stream)) from the media data dividing portion 30, and the follow file URL designating box which stores the URL of the follow file next to this follow file are packed (FIG. 7B).

More specifically, the follow file packing portion 52 prepares a divided file (follow file) where only information inherent in the divided file (stbl box) is stored in the header portion. Such a follow file does not match the syntax of the MP4 file format (does not include Ftyp Box or Moov Box). However, the file size (header size) can be decreased.

The first file prepared by the first file packing portion 51 and the follow files prepared by the follow file packing portion 52 are inputted to the URL storing portion 53. The URL storing portion 53 stores, in the follow file designating boxes of the respective inputted files, URLs showing the places where the next file is stored. It is to be noted that, with regard to the last follow file, since there is no URL to be stored, no URL is stored.

The URL storing portion 53 outputs a file after the URL is stored. In this way, a plurality of divided files formed by dividing one MP4 file is outputted from the editing apparatus 100.

«Modified example» The following modifications are possible with regard to the editing apparatus 100. The file packing portion 50 of the editing apparatus 100 described above is structured such that the follow file designating URL box is set with regard to all the divided files. Instead of the structure, the last follow file may be structured such that the follow file designating URL box is not prepare therein. For example, the size information calculating portion 42 is provided with a counter for counting the number of divided files (the number of division points + 1). The size information calculating portion 42 increments the counter every time size calculation is carried out with regard to a divided file. When size calculation is carried out with regard to the last divided file (for example, when the value of the counter = the number of divided files), the size calculation is carried out without taking into consideration the size of the follow file designating URL box.

Further, the follow file packing portion 52 is also provided with a counter for counting the number of follow files, and is structured such that a notification of the number of the follow files (the number of division points) is made from the analyzing portion 10 or the like. The follow f ile packing portion 52 increments the counter every time a follow file is packed. When the last follow file is packed (for example, when the value of the counter = the number of division points), a follow file which does not include a follow file designating URL box is prepared. This can decrease the size of the follow files.

Further, in the follow file designating URL box added by the first file packing portion, a method of calculating the URL of a follow file (for example, calculation formula) based on the URL may be stored together with the URL. For example, the URL of the next follow file is determined by changing a part of the character string of the URL. More specifically, the name of the file included in the URL includes a number, and by incrementing or decrementing the number, the URL of the next follow file can be determined. Such calculation is carried out on the side of the playback apparatus. In this case, the size information calculating portion 43 is structured not to take into consideration the follow file designating URL box in size calculation of a follow file.

This allows packing of the follow file designating URL box only in the first file. Therefore, the size of follow files can be decreased.

<Content Generating Apparatus>
Next, an embodiment of a content generating apparatus for playing back content (media data) included in a plurality of divided files prepared by the content editing apparatus is described.

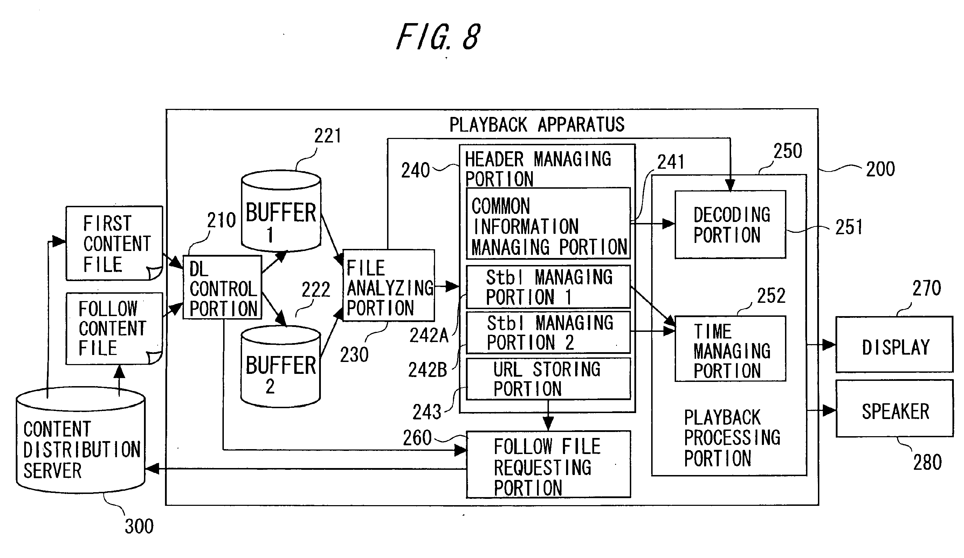

«Structure of Reproducing apparatus»
Fig. 8 is a diagram illustrating an exemplary structure of an embodiment (playback (reproducing) apparatus 200) of the content generating apparatus (content playback (reproducing) apparatus) according to the present invention. In Fig. 8, the playback apparatus 200 includes a DL control portion 210 for controlling download (DL) of a plurality of divided files (the first file and a follow file) with content stored therein, first and second buffers 221 and 222 for accumulating the downloaded divided files, a file analyzing portion 230 for analyzing divided files accumulated in the first and second buffers 221 and 222, a header managing portion 240 for managing header information of the respective divided files, a playback processing portion 250 for carrying out playback processing of the content based on the divided files, and a follow file requesting portion 260. The playback processing portion 250 is connected to a display (display device) 270 for displaying a playback image and a speaker 280 for outputting playback sound.

As illustrated in Fig. 8, a plurality of divided files are managed by a content distribution server 300 placed on a network (e.g., the Internet). The DL control portion 210 requests the content distribution server 300 to distribute the content, and receives the first file and the follow file(s).

The DL control portion 210 determines which of the first and second buffers 221 and 222 accumulates a downloaded divided file. Here, the DL control portion 210 alternately switches the buffer to accumulate the divided file in the order of the first buffer 221 and the second buffer 222, for example. In other words, the DL control portion 210 determines the buffer to accumulate the divided files such that a divided file downloaded from the content distribution server 300 is accumulated in a buffer which is not used.

The first and second buffers 221 and 222 temporarily store the divided files written by the DL control portion 210. The file analyzing portion 230 analyzes the divided files. The file analyzing portion 230 inputs the media data portion (Mdat Box) in the divided file to the playback processing portion 250, and gives the header portion (Ftyp Box (with regard to only the first file), Moov Box, and follow file designating URL box) in the divided files and the result of the analysis to the header managing portion 240.

The header managing portion 240 includes a common information managing portion 241 for managing header information common to a plurality of divided files, a first stbl managing portion 242A (stbl managing portion 1) and a second stbl managing portion 242B (stbl managing portion 2) for managing information in the stbl box in a divided file (information inherent in divided files), and a URL storing portion 243 for storing a URL stored in the follow file designating URL box.

The file analyzing portion 230 determines, by analyzing a divided file, whether the divided file is a first file or a follow file. Further, the file analyzing portion 230 stores header information common to divided files (e.g., codec information) in the common information managing portion 241 based on the analysis of the divided files.

Further, the file analyzing portion 230 stores the stbl box (time information, size information, and offset information) extracted by the analysis of the header portion in either of the first and second stbl managing portions 242A and 242B. Here, the file analyzing portion 230 determines an stbl managing portion which is not used, and stores the stbl box in that stbl managing portion. Further, the file analyzing portion 230 stores the URL in the URL storing portion 243 when the URL of the next follow file is found by the analysis.

The playback processing portion 250 carries out playback processing of the respective media data included in the content file. The playback processing portion 250 includes a decoding portion 251 for decoding the respective media data inputted from the file analyzing portion 230 according to the codec information stored in the common information managing portion 241 and a time managing portion 252 for connecting, to an output device (the display 270 or the speaker 280), playback output (e.g., video output and audio output) of the media data decoded based on at least the time information managed by the first stbl managing portion 242A or the second stbl managing portion 242B. The display 270 displays an image based on the video output on a display screen, while the speaker 280 outputs sound based on the audio output.

The first stbl managing portion 242A and the second stbl managing portion 242B are used alternately according to a predetermined order of use (e.g., 242A -> 242B -> 242A ···).

The follow file requesting portion 260 receives, from the header managing portion 240, a download request instruction of a follow file and the URL of the follow file stored in the URL storing portion243. The follow file requesting portion 260 supplies the follow file stored at the URL to the content distribution server 300 when it receives the instruction and the URL.

The playback apparatus 200 described above is mounted on an information processing apparatus (mobile terminal: mobile telephone) having a processor such as a CPU, a storage device (memory) for storing programs executed by the processor and data used when the programs are executed, an I/O interface, a communication interface, a display control device, an audio control device (sound chip), and the like.

In this case, the functions of the download control portion 210, the file analyzing portion 230, the header managing portion 240, the playback processing portion 250, and the follow file requesting portion 260 are implemented based on control by the execution of the programs by the processor. Further, those functions can also be implemented by control by hardware logic.

«Operation Example of Playback Apparatus»
Next, an operation example when the playback apparatus 200 plays back content composed of a plurality of (e.g., two) divided files is described. In Fig. 8, the DL control portion 210 receives the first content file (first file) which is transmitted first from the content distribution server 300 in response to content distribution request.

Then, the DL control portion 210 stores, according to the order of use of the buffers determined in advance, the first file in the first buffer 221, for example. The file analyzing portion 230 analyzes the first file downloaded into the first buffer 221.

The file analyzing portion 230 stores, in the common information managing portion 241 of the header managing portion 240, common information portion of the first file and the follow file(s) (information used commonly to the divided files such as the codec information stored in the header portion (Moov Box) of the first file).

Further, the file analyzing portion 230 stores, in the stbl managing portion according to the predetermined order of use, the stbl box storing information inherent in the first file. Here, stbl box is stored in the first stbl managing portion 242A. Further, the file analyzing portion 230 stores, in the URL storing portion 243, the URL of the follow file designated by the follow file designating box.

Further, the file analyzing portion 230 transmits the media data in the first file to the playback processing portion 250. The playback processing portion 250 decodes the media data using the codec information or the like stored in the common information managing portion 241, carries out the time management processing using the information stored in the first stbl managing portion 242A, and displays the playback output of the media data (e.g., video) on the display 270.

Further, after confirming the completion of the download of the first file (for example, a notification from the DL control portion 210 or the file analyzing portion 230 is made), the header managing portion 240 instructs the follow file requesting portion 260 to download the follow file regardless of whether the playback of the content based on the first file is completed or not. The follow file requesting portion 260 requests the content distribution server 300 of the download of the follow file from the URL stored in the URL storing portion 243. This starts supply of the follow file next to the first file from the content distribution server 300 to the playback apparatus 200.

After receiving the follow file, the DL control portion 210 stores the follow file in the second buffer 222 according to the predetermined order of use. This allows downloading of the follow file even if the first buffer 221 is being used.

Here, the header size of the follow file is smaller than the header size of the MP4 file. More specifically, the size of the follow file is smaller than that of the MP4 file which stores the same media data as that included in the follow file. Therefore, the download time of the follow file is shorter than the download time of the MP4 file. Accordingly, the download of the follow file is completed before the playback based on the immediately preceding downloaded divided file is completed.

The file analyzing portion 230 analyzes the follow file downloaded into the second buffer 222. The file analyzing portion 230 stores in the second stbl management 242B the stbl box in the follow file according to the order of use of the stbl managing portions.

After the playback of the content based on the first file is completed, the media data downloaded into the second buffer 222 is sent via the file analyzing portion 230 to the playback processing portion 250. The playback processing portion carries out the playback processing using the information stored in the common information managing portion 241 of the header managing portion 240 and the information stored in the second stbl managing portion 242B. In this way, continuous playback of the content stored in the plurality of divided files is carried out.

It is to be noted that, when there is a follow file next to the follow file, since the URL of the next follow file is included in the follow file, the follow file requesting portion 260 requests the download of the next follow file from the URL. In this case, the next follow file is downloaded into the firstbuffer 221. Further, the stbl box in the next follow file is stored in the first stbl managing portion 242A (since the playback based on the first file is completed, the first buffer 221 and the first stbl managing portion 1 are not used).

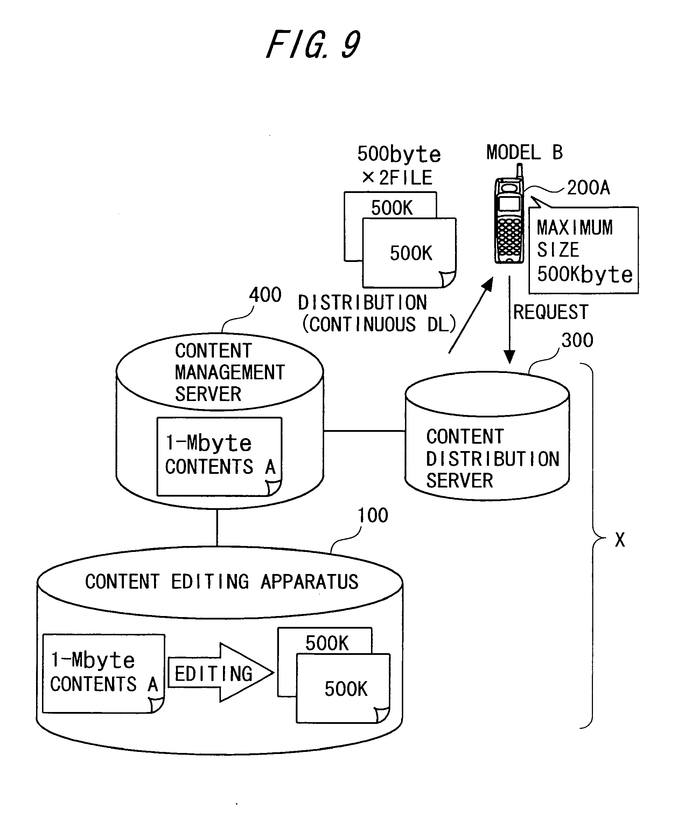

<Application Example>
Next, an application example of the editing apparatus 100 and the playback apparatus 200 is described. Fig. 9 is a diagram illustrating an exemplary content distribution system with the editing apparatus 100 and the playback apparatus 200 applied thereto.

Fig. 9 illustrates a mobile terminal 200A including the playback apparatus 200 and a content distribution system X for distributing content to the mobile terminal 200A. The content distribution system X includes a content distribution server (distributing apparatus) 300 placed on the network (the Internet), a content management server (managing apparatus) 400 connected to the content distribution server 300, and the editing apparatus 100 connected to the content management server 400.

The content distribution server 300 gives, in response to a request from the terminal device 200A, the content file managed by the content management server 400 to the terminal device 200A. The content management server 400 manages the content files, and gives a content file requested by the mobile terminal 200A to the content distribution server 300.

When the content management server 400 does not have a content file requested by the mobile terminal 200A, the editing apparatus 100 prepares (edits), according to an instruction from the content management server 400, a plurality of divided files obtained by dividing the content file, and gives them to the content management server 400.

When a user of the mobile terminal 200A desires content to be distributed, the kind of the mobile terminal 200A (here, Model B) and the identification information of the content to be distributed are transmitted from the mobile terminal 200A to the content distribution server 300 as a content distribution request.

The content distribution server 300 transmits as a content obtainment request the maximum size (500 Kbytes in this example) according to the used model and the content identification information to the content management server 400.

The content management server 400 requests the editing apparatus 100 to divide and edit the content to be edited based on the maximum size. Here, the content management server 400 has a content file of 1 Mbytes, corresponding to the content identification information. The content management server 400 gives the content file and the maximum size to the editing apparatus 100.

The editing apparatus 100 has the structure illustrated in Fig. 1, and edits (prepares) two 500-Kbyte divided files based on the dividing method described with reference to Figs. 3-6. These divided files are given to the content management server 400. The content management server 400 gives the first file of the divided files to the content distribution server 300 as a response to the content obtainment request. Further, the content management server 400 manages the remaining divided file according to the URL of the follow file described in the first file.

The content distribution server 300 transmits the first file to the mobile terminal 200A as a response to the content distribution request. This starts the download of the first file and the content playback performed based on the first file, in the mobile terminal 200A. Then, when the download of the first file is completed, the mobile terminal 200A gives a request for download of the follow file to the content distribution server 300.

The content distribution server 300 gives the request to the content management server 400 according to the URL of the follow file. The content management server 400 extracts the follow file according to the URL, and gives it to the content distribution server300. The content distribution server 300 transmits the follow file to the mobile terminal 200A.

In this way, the mobile terminal 200A continuously downloads the first file and the follow file. This allows the download of the follow file to be completed before the playback performed based on the first file is completed, and the content can be continuously played back.

<Action and Effect of Embodiments>
With the editing apparatus 100, a content file (composite content file), such as an MP4 file, having a syntax (format) where one or more media data main body and playback condition information (header information) of the media data are separately stored is divided and edited into two or more divided sizes according to a predetermined size.

Here, in the header dividing portion 40, based on a division point of the media data, the header information is divided and reedited. Then, in the file packing portion 50, a plurality of divided files having the MP4 file format are not generated. Instead, as the second and the following divided files, divided files with a part of the header portion of the MP4 file format omitted (including only the stbl box) are prepared in the file packing portion 50. This decreases the sizes of the second and the following divided files. Further, since a plurality of MP4 files are not prepared, time necessary for preparing the divided files is shortened.

In this regard, the file size can be prevented from being increased unlike a movie fragment of a 3GP file format which allows continuous playback, where since a data portion in a fragment includes access information (control information), if the fragment is divided, the access information is prepared for each of the divided fragments.

Further, for the purpose of allowing continuous download of the divided files, a URL indicating the next divided file is stored in the divided file is stored in the divided file. The URL is utilized for continuous download of divided files by the playback apparatus.

As described above, the editing apparatus 100 can provide to the playback apparatus side a plurality of divided files each having the maximum file size which can be handled by the playback apparatus side, so that the divided files can be continuously downloaded. Further, since the size of the divided files (follow files) is limited, the download time of the follow files can be shortened, and, before content playback performed based on a certain file is completed, download of the next divided file can be completed.

Further, the playback apparatus 200 has a plurality of buffers and stbl managing portions and is structured such that it can hold a plurality of divided files and stbl boxes in the respective divided files in parallel. This makes it possible to carry out, during the content is played back based on a certain divided file, the download of the next divided file. This makes it possible to complete, before playback of content based on a certain divided file is completed, the download of the next divided file. This allows continuous playback of the content.

With regard to a content file having a format such as MP4, there is a lot of opportunities of progressive download where after the header information is downloaded, playback is carried out while media data is downloaded.

In this case, when the header size is increased, it takes a lot of time to start the playback after the download is started. However, since the editing apparatus 100 limits the increase in header size by the division, there is an effect that the time required from the start of the download to the playback is shortened.

## Claims

1. A content editing apparatus, comprising:
an analyzing portion analyzing a content file having a format where control information including reproduction conditions of media data and the media data are separately stored in a header portion and a media data portion, respectively, and determining a division point of the media data portion according to a predetermined size;
a media data dividing portion dividing the media data portion based on the division point;
a header dividing portion dividing the header portion into a plurality of divided header portions based on a division place of the media data portion; and
a preparing portion preparing a plurality of divided content files where the plurality of divided media data portions and the plurality of divided header portions are combined.

2. A content editing apparatus according to claim 1, wherein the preparing portion stores in a header portion of a first divided content file within the plurality of divided content files, information common to the plurality of divided content files and information inherent in the first divided content file, and stores in a header portion of a divided content file following the first divided content file, information inherent in the divided content file.

3. A content editing apparatus according to claim 1 or 2, wherein the preparing portion adds, to a header portion of a divided content file, information indicating a place where a next divided content file which follows the divided content file is stored.

4. A content reproducing apparatus for downloading from a network and reproducing content stored in a plurality of divided content files, comprising:
a download control portion downloading into a first storage area a divided content file including information of a place where a next divided content file is stored;
a reproduction processing portion carrying out reproduction processing of content based on the divided content file; and
a download request portion requesting the network of download of the next content file based on the place where the next content file is stored before the reproduction processing based on the divided content file is completed, wherein:
the download control portion downloads the next divided content file transmitted from the network in response to the download request into a second storage area different from the first storage area; and
the reproduction processing portion carries out reproduction processing of the next divided content file stored in the second storage area following the completion of the reproduction processing of the divided content file.

5. A content reproducing apparatus according to claim 4, wherein:
a first divided content file within a plurality of divided content files first downloaded by the download control portion includes common information common to the plurality of content files; and
the reproduction processing portion carries out reproduction processing of a divided content file which follows the first content file using the common information.

6. A method of editing content, comprising:
analyzing a content file having a format where control information including reproduction conditions of media data and the media data are separately stored in a header portion and a media data portion, respectively, and determining a division point of the media data portion according to a predetermined size;
dividing the media data portion based on the division point;
dividing the header portion into a plurality of divided header portions based on a division place of the media data portion; and
preparing a plurality of divided content files where the plurality of divided media data portions and the plurality of divided header portions are combined.

7. A method of editing content according to claim 6, wherein information common to the plurality of divided content files and information inherent in a first divided content file within the plurality of divided content files are stored in a header portion of the first divided content file, and information inherent in a divided content file is stored in a header portion of a divided content file following the first divided content file.

8. A method of editing content according to claim 6 or 7, wherein information indicating a place where a next divided content file which follows a divided content file is stored is added to a header portion of the divided content file.

9. A content reproducing method of downloading from a network and reproducing content stored in a plurality of divided content files, comprising:
downloading into a first storage area a divided content file including place information indicating a place where a next divided content file is stored;
carrying out reproduction processing of content based on the divided content file; and
requesting the network of download of the next content file based on the place information before the reproduction processing based on the divided content file is completed;
downloading the next divided content file transmitted from the network in response to the download request into a second storage area different from the first storage area; and
carrying out reproduction processing of the next divided content file stored in the second storage area following the completion of the reproduction processing of the divided content file.

10. A content reproducing method according to claim 9, wherein:
a first divided content file within the plurality of divided content files first downloaded includes common information common to the plurality of content files; and
reproduction processing of a divided content file which follows the first content file is carried out using the common information.

11. A program executed by a computer comprising steps of:
analyzing a content file having a format where control information including reproduction conditions of media data and the media data are separately stored in a header portion and a media data portion, respectively, and determining a division point of the media data portion according to a predetermined size;
dividing the media data portion based on the division point;
dividing the header portion into a plurality of divided header portions based on a division place of the media data portion; and
preparing a plurality of divided content files where the plurality of divided media data portions and the plurality of divided header portions are combined.

12. A program according to claim 11, wherein information common to the plurality of divided content files and information inherent in a first divided content file are stored in a header portion of the first divided content file within the plurality of divided content files, and information inherent in a divided content file is stored in a header portion of the divided content file following the first divided content file.

13. A program according to claim 11 or 12, wherein information indicating a storing place of a next divided content file which follows a divided content file is added to a header portion of a divided content file.

14. A program for a computer downloading from a network and reproducing content stored in a plurality of divided content files, the program comprising steps of:
downloading into a first storage area a divided content file including place information indicating a place where a next divided content file is stored;
carrying out reproduction processing of content based on the divided content file;
requesting the network of download of the next content file based on the place information before the reproduction processing based on the divided content file is completed;
downloading the next divided content file transmitted from the network in response to the download request into a second storage area different from the first storage area; and
carrying out reproduction processing of the next divided content file stored in the second storage area following the completion of the reproduction processing of the divided content file.

15. A program according to claim 14, wherein:
a first divided content file within the plurality of divided content files first downloaded includes common information common to the plurality of content files; and
reproduction processing of a divided content file which follows the first content file is carried out using the common information.
